Europäisches Patentamt

European Patent Office

Office européen des brevets

(11) Veröffentlichungsnummer: **0 253 236 B1**

(12) **EUROPÄISCHE PATENTSCHRIFT**

(45) Veröffentlichungstag der Patentschrift: **15.01.92**

(21) Anmeldenummer: **87109594.9**

(22) Anmeldetag: **03.07.87**

(51) Int. Cl.⁵: **C08L 51/04**, C08L 25/12

(54) Verfahren zur Herstellung thermoplastischer Formmassen.

(30) Priorität: **15.07.86 DE 3623758**

(43) Veröffentlichungstag der Anmeldung:
**20.01.88 Patentblatt 88/03**

(45) Bekanntmachung des Hinweises auf die
Patenterteilung:
**15.01.92 Patentblatt 92/03**

(84) Benannte Vertragsstaaten:
**DE ES FR GB IT NL**

(56) Entgegenhaltungen:
**EP-A- 0 104 899**

**CHEMICAL ABSTRACTS, Band 86, Nr. 12, 21.
März 1977, Seite 40, Zusammenfassung Nr.
73688r, Columbus, Ohio, US; & JP-A-76 125
494 (JAPAN SYNTHETIC RUBBER CO., LTD)
01-11-1976**

**CHEMICAL ABSTRACTS, Band 86, Nr. 12, 21.
März 1977, Seite 40, Zusammenfassung Nr.
73687q, Columbus, Ohio, US; & JP-A-76 125
495 (JAPAN SYNTHETIC RUBBER CO., LTD)
01-11-1976**

(73) Patentinhaber: **BAYER AG**

**W-5090 Leverkusen 1 Bayerwerk(DE)**

(72) Erfinder: **Eichenauer, Herbert, Dr.
Goethestrasse 71
W-4047 Dormagen(DE)**
Erfinder: **Pischtschan, Alfred, Dr.
Zur Eiche 33
W-5067 Kürten(DE)**
Erfinder: **Ott, Karl-Heinz, Dr.
Paul-Klee-Strasse 54
W-5090 Leverkusen(DE)**

**Beschreibung**

Die Erfindung betrifft ein Verfahren zur Herstellung thermoplastischer Formmassen vom ABS-Typ mit gegenüber bekannten ABS-Formmassen verbesserten Eigenschaften, insbesondere hoher Zähigkeit und hoher Härte bei leichter Verarbeitbarkeit und gutem Oberflächenglanz.

ABS-Formmassen sind Zweiphasenkunststoffe aus:

I. einem thermoplastischen Copolymerisat aus Styrol und Acrylnitril, in dem das Styrol ganz oder teilweise durch α-Methylstyrol oder Methylmethacrylat ersetzt werden kann; dieses Copolymerisat, auch als SAN-Harz oder Matrix-Harz bezeichnet, bildet die äußere Phase;

II. mindestens einem Pfropfpolymerisat, welches hergestellt worden ist durch Pfropfreaktion eines oder mehrerer der unter I. genannten Monomeren auf Butadien-Homo- oder Copolymerisat ("Pfropfgrundlage"). Dieses Pfropfpolymerisat ("Elastomerphase" oder "Pfropfkautschuk") bildet die disperse Phase im Matrixharz.

Bei gleicher Matrix wird die Zähigkeit einer ABS-Formmasse im wesentlichen durch den Pfropfkautschuk bestimmt. Die mit üblichen ABS-Formmassen erreichbare Zähigkeit reicht derzeit für stark beanspruchte Formteile, z.B. im Fahrzeug-Innenbereich, nicht immer mit der notwendigen Sicherheit aus. Es besteht daher Bedarf an Pfropfkautschuken, auf deren Basis ABS-Formmassen mit erhöhter Zähigkeit hergestellt werden können, ohne daß sich die übrigen Eigenschaften wie Steifigkeit bzw. Härte, Verarbeitbarkeit und Oberflächenglanz verschlechtern.

Aus der DE-AS 18 13 719 sind zähe, gut verarbeitbare ABS-Formmassen bekannt, die erhalten werden durch einstufige, unter Druck ablaufende Emulsions-Pfropfpolymerisation von 75 - 90 Gew.-Teilen eines Monomerengemisches auf 10 - 25 Gew.-Teile eines Gemisches zweier Kautschuklatices, wovon einer ein reines Polybutadien und der andere ein SBR-Latex mit ein Styrolgehalt <50 % und einer bestimmten Teilchengröße ist.

In der DE-OS 18 04 763 wird ein ABS-Material beschrieben, zu dessen Herstellung ein vernetztes Pfropfmischpolymerisat mit einem Quellindex >20 und das Matrix-Harz getrennt synthetisiert und dann gemischt werden. Wie aus den Ausführungsbeispielen hervorgeht, führt dies zwar zu hoher Zähigkeit, aber auch zu schlechtem Glanz.

Die US-PS 3 509 238 beschreibt ABS-Produkte, die unter Verwendung zweier Pfropfpolymerisate hergestellt werden, von denen eines schwach, das andere stark gepfropft ist. Diese Produkte haben jedoch unzureichende Eigenschaften bei tiefen Temperaturen.

In der US-PS 3 928 494 sind ABS-Produkte mit zwei verschieden stark gepfropften Pfropfpolymerisaten beschrieben, bei denen sich das schwächer bepfropfte feinteilige Material bei Sprühtrocknung oder Koagulation zu Teilchenaggregaten zusammenlagert. Derartige Aggregate stellen locker gebundene Gebilde dar, die unter hohen Temperaturen und Scherkräften, wie sie beispielsweise bei der Spritzgußverarbeitung auftreten können, wieder auseindergerissen werden und dann zu nicht ausreichenden Produktzähigkeiten führen.

Die DE-OS 33 04 544 beschreibt ABS-Formmassen unter Verwendung von Pfropfkautschuken auf Basis eines Kautschukgemisches aus einem schwach vernetzten grobteiligen Latex und einem feinteiligen Latex, wobei der Pfropfstellenabstand einen definierten Wert annehmen muß. Diese Produkte besitzen zwar eine hohe Zähigkeit, die Härtewerte sind jedoch unbefriedigend.

Gegenstand der Erfindung ist ein Verfahren zur Herstellung einer thermoplastischen Formmasse durch Mischen von

10 bis 65 Gew.-% mindestens eines Pfropfpolymerisats, welches erhältlich ist durch Emulsionspolymerisation von Styrol und Acrylnitril im Gewichtsverhältnis 90:10 bis 50:50, wobei Styrol ganz oder teilweise ersetzt werden kann durch α-Methylstyrol oder Methylmethacrylat, in Gegenwart mindestens eines Kautschuks mit einer Glastemperatur unter 0 °C als Grundlage wobei das Massenverhältnis von eingesetzten Monomeren zu eingesetztem Kautschuk 20:80 bis 70:30 beträgt und

90 bis 35 Gew.-% eines Copolymerisats aus Styrol und Acrylnitril im Gewichtsverhältnis 90:10 bis 50:50, wobei das Styrol ganz oder teilweise durch α-Methylstyrol oder Methylmethacrylat ersetzt werden kann,

dadurch gekennzeichnet, daß man zur Herstellung des Pfropfpolymerisats die Pfropfmonomeren und 0,05 bis 1,00 Gew.-Teile (pro 100 Gew.-Teile Pfropfmonomer) eines Mercaptans stufenweise über einen Zeitraum zu dem Latex des Kautschuks gibt, wobei mindestens in der ersten Hälfte des Zeitraums die in jedem Zeitintervall $\Delta t_{n+1}$ zugegebene monomerteilmenge das 0,30 bis 0,95fache, vorzugsweise das 0,40 bis 0,90fache und besonders bevorzugt das 0,45 bis 0,85fache der im vorhergehenden Zeitintervall $\Delta t_n$ zugegebenen Monomermenge beträgt und der gesamte Zeitraum n Zeitintervalle mit n = 3 bis 30, vorzugsweise 3 bis 15 umfaßt und jedes Zeitintervall Δt 5 bis 100, vorzugsweise 10 bis 90 und besonders bevorzugt 15 bis 75 Minuten lang ist.

Die dabei verwendeten Kautschuke müssen eine Glastemperatur unterhalb von 0 ° C besitzen.

Geeignet sind z.B.:

- Dienkautschuke, d.h., Homopolymerisate von konjugierten Dienen mit 4 bis 8 C-Atomen wie Butadien, Isopren, Chloropren oder deren Copolymerisate mit bis zu 60 Gew.-%, bevorzugt 1 bis 30 Gew.-% eines Vinylmonomeren, z.B. Acrylnitril, Methacrylnitril, Styrol, α-Methylstyrol, Halogenstyrole, $C_1$-$C_4$-Alkylstyrole, $C_1$-$C_6$-Alkylacrylate und -methacrylate, Alkylenglykol-di-acrylate und -methacrylate, sowie Divinylbenzol;

- Acrylatkautschuke, d.h., Homo- und Copolymerisate von $C_1$-$C_{10}$-Alkylacrylaten, z.B. Homopolymerisate von Ethylacrylat, Butylacrylat oder Copolymerisate mit bis zu 40 Gew.-%, bevorzugt nicht mehr als 10 Gew.-% Mono-Vinylmonomeren, z.B. Styrol, Acrylnitril, Vinylbutylether, Acrylsäure(ester), Methacrylsäure(ester), Vinylsulfonsäure. Bevorzugt werden solche Acrylatkautschuk- Homo- bzw. Copolymerisate eingesetzt, die 0,01 bis 8 Gew.-% Divinyl-oder Polyalkylverbindungen und/oder n-Methylolacrylamid- (oder -methacrylamid)-Derivate enthalten, die als Vernetzer wirken, z.B. Divinylbenzol, Trialkylcyanurat, und wobei der Kautschuk C = C-Doppelbindungen enthält;

- Terpolymer-Kautschuke, d.h. Copolymerisate aus monoolefinischen Kohlenwasserstoffen, z.B. Ethylen, Propylen und Dienen, z.B. Butadien, Cyclopentadien.

Bevorzugt sind Polybutadienkautschuke, SBR-Kautschuke mit bis zu 30 Gew.-% einpolymerisiertem Styrol und Acrylatkautschuke, besonders solche, die eine Kern-Mantel-Struktur aufweisen, wie in DE-OS 3 006 804 beschrieben, sowie EPDM-Kautschuke.

Zur Herstellung der erfindungsgemäßen Formmassen kommen Latices mit mittleren Teilchendurchmessern ($d_{50}$) von 0,05 bis 2,0 μm, vorzugsweise 0,1 bis 1,0 μm, in Betracht. Die mittleren Teilchendurchmesser werden mittels Ultrazentrifuge (vergl. W. Scholtan, H. Lange: Kolloid.-Z. u. Z. Polymere 250, S. 782-796 (1972) bestimmt. Gemische mehrerer Latices können ebenfalls verwendet werden (vergl. DE-OS 1 813 719). Die Herstellung dieser Latices erfolgt in der Regel durch Emulsionspolymerisation, die erforderlichen Reaktionsbedingungen, Hilfsstoffe und Arbeitstechniken sind grundsätzlich bekannt.

Es ist auch möglich, nach bekannten Methoden zunächst ein feinteiliges Kautschukpolymerisat herzustellen, und es anschließend in bekannter Weise zur Einstellung der erforderlichen Teilchengröße zu agglomerieren. Einschlägige Techniken sind beschrieben (vergl. EP-PS 0 029 613; EP-PS 0 007 810; DD-PS 144 415; DE-AS 12 33 131; DE-AS 12 58 076; DE-OS 21 01 650; US-PS 1 379 391).

Ebenfalls kann nach der sogenannten Saatpolymerisationstechnik gearbeitet werden, bei der zunächst z.B. ein feinteiliges Butadienpolymerisat hergestellt und dann durch Weiterumsatz mit Butadien enthaltenden Monomeren zu größeren Teilchen weiterpolymerisiert wird.

Prinzipiell kann man Kautschukpolymerisatlatices auch herstellen durch Emulgieren von fertigen Kautschukpolymerisaten in wäßrigen Medien (vergl. japanische Patentanmeldung 55 125 102).

Die Herstellung der erfindungsgemäßen Pfropfpolymerisate erfolgt durch Emulsionspolymerisation der Pfropfmonomeren in Gegenwart der jeweiligen in Latexform vorliegenden Pfropfgrundlage bei Temperaturen zwischen 25 ° und 160 ° C, vorzugsweise zwischen 40 ° und 90 ° C. Dabei können übliche Emulgatoren wie Alkylsulfate, Alkylsulfonate, Aralkylsulfonate, Seifen gesättigter oder ungesättigter Fettsäuren, sowie alkalischer disproportionierter oder hydrierter Abietin- oder Tallölsäuren verwendet werden. Als Initiatoren kommen anorganische und organische Peroxide, z.B. $H_2O_2$, Di-tert.-Butylperoxid, Cumolhydroperoxid, Dicyclohexylpercarbonat, p-Menthanhydroperoxid, Azoinitiatoren wie z.B. Azobisisobutyronitril, anorganische Persalze wie K-Persulfat, K-Perphosphat, Na-Perborat sowie Redox-Systeme in Betracht, die sich aus einem - in der Regel organischen - Oxidationsmittel und einem Reduktionsmittel zusammensetzen, wobei im Reaktionsmedium zusätzlich Schwermetallionen vorhanden sind (siehe H. Logemann in: Houben-Weyl, Methoden der organischen Chemie, Bd. 14/1, S. 263-297).

Zur Pfropfreaktion werden erfindungsgemäß Styrol und Acrylnitril im Gewichtsverhältnis 90:10 bis 50:50, vorzugsweise 65:35 bis 75:25 eingesetzt, wobei Styrol ganz oder teilweise ersetzt werden kann durch α-Methylstyrol oder Methylmethacrylat. Vorzugsweise arbeitet man mit Styrol/Acrylnitril-Gemischen.

Nach dem erfindungsgemäßen Verfahren muß die Zugabe der Pfropfmonomeren zu der in Latexform vorliegenden Kautschukgrundlage innerhalb eines Zeitraumes derart erfolgen, daß mindestens in der ersten Hälfte des Zeitraums die in jedem Zeitintervall $\Delta t_{n+1}$ zugegebene Monomerteilmenge das 0,30 bis 0,95fache, vorzugsweise das 0,40 bis 0,90fache und besonders bevorzugt das 0,45 bis 0,85fache der im vorhergehenden Zeitintervall $\Delta t_n$ angegebenen Monomermenge beträgt, wobei der gesamte Zeitraum n Zeitintervalle mit 3 bis 30, vorzugsweise 3 bis 15, umfaßt und jedes Zeitintervall Δt 5 bis 100, vorzugsweise 10 bis 90 und besonders bevorzugt 15 bis 75 Minuten lang ist.

Außerdem müssen zusammen mit den Pfropfmonomeren 0,05 bis 1,00 Gew.-Teile (pro 100 Gew.-Teile Pfropfmonomer), vorzugsweise 0,08 bis 0,80 Gew.-Teile (pro 100 Gew.-Teile Pfropfmonomer) eines Mercaptans zugegeben werden. Geeignete Mercaptane sind z.B. aliphatische Mercaptane wie Ethyl-, n-Propyl-, n-Butyl-, tert.-Butyl-, n-Pentyl-, n-Hexyl-, n-Octyl-, n-Decyl-, n-Dodecyl-, tert.-Dodecyl-, n-Hexadecyl- und n-Octadecylmercaptan oder aromatische Mercaptane wie Thiophenol. Bevorzugte Mercaptane sind tert.-Dodecylmercaptan und n-Dodecylmercaptan bzw. deren Gemische.

Die Pfropfpolymerisate besitzen einen Kautschukgehalt von 30 bis 80 Gew.-%, vorzugsweise von 35 bis 70 Gew.-%.

Zur Erzeugung der Formmassen wird das Pfropfpolymerisat mit einem Matrixharz abgemischt. Geeignete Matrixharze bestehen z.B. aus Copolymerisaten des Styrols und Acrylnitrils im Gewichtsverhältnis 90:10 bis 50:50, wobei das Styrol ganz oder teilweise durch $\alpha$-Methylstyrol oder Methylmethacrylat ersetzt werden kann, und wobei gegebenenfalls anteilmäßig bis zu 25 Gew.-%, bezogen auf Matrixharz, ein weiteres Monomer aus der Reihe Maleinsäureanhydrid, Malein-(Fumar)säurebisalkylester, Maleinsäureimid, N-(Cyclo)-alkylmaleinimid, N-(Alkyl)phenylmaleinimid, Inden mitverwendet werden kann.

Einzelheiten zur Herstellung dieser Harze sind beispielsweise in der DE-AS 24 20 358 und der DA AS 27 24 360 beschrieben. Durch Massepolymerisation hergestellte Matrixharze haben sich besonders bewährt.

Zur Herstellung der Formmasse kann das Pfropfpolymerisat mit dem Matrixharz auf verschiedene Weise gemischt werden. Erfolgte die Herstellung des Matrixharzes durch Emulsionspolymerisation, so können die Latices gemischt und gemeinsam ausgefällt oder auch getrennt ausgefällt und die resultierenden Festsubstanzen gemischt werden.

Wird z.B. das Matrixharz durch Lösungs- oder Massepolymerisation hergestellt, so muß das Pfropfpolymerisat getrennt ausgefällt werden. Hierzu verwendet man bekannte Verfahren, beispielsweise Zusatz von Salzen und/oder Säuren, wonach die Fällprodukte gewaschen, getrocknet und gegebenenfalls aus der Pulverform in eine Granulatform überführt werden. Als Mischvorrichtungen für Fällprodukte bzw. Granulate kommen beispielsweise Mehrwalzenstühle, Mischextruder oder Innenkneter in Betracht.

Der Anteil des Pfropfproduktes an der Gesamtmenge beträgt erfindungsgemäß 10 - 65 Gew.-%, wobei der Anteil der Pfropfpolymerisate geringer ist, da nicht alle Monomeren Pfropfäste bilden. Bevorzugte Formmassen haben folgende Zusammensetzung:

Pfropfprodukt:      30 - 60 Teile

Matrixharz:          70 - 40 Teile,

wobei mit Anteilen von 40 - 60 Teilen Pfropfprodukt die höchsten Zähigkeiten erreicht werden.

Den Formmassen der Erfindung können bei der Herstellung, Aufarbeitung, Weiterverarbeitung und Endformung die erforderlichen bzw. zweckmäßigen Additive zugesetzt werden, z.B. Antioxidantien, UV-Stabilisatoren, Peroxidzerstörer, Antistatika, Gleitmittel, Flammschutzmittel, Füll- oder Verstärkerstoffe (Glasfasern, Kohlefasern, etc.) und Farbmittel.

Die Endverformung kann auf handelsüblichen Verarbeitungsaggregaten vorgenommen werden und umfaßt z.B. Spritzgußverarbeitung, Plattenextrusion mit gegebenenfalls anschließender Warmverformung, Kaltverformung, Extrusion von Rohren und Profilen oder Kalander-Verarbeitung.

Weiterhin können die erfindungsgemäß hergestellten Pfropfpolymerisate als Modifikatoren zur Erhöhung der Zähigkeit einzelner oder aus verschiedenen Materialien abgemischter thermoplastischer Formmassen dienen. Beispiele für modifizierbare thermoplastische Formmassen sind:

a) Weitere Homo- und Mischpolymerisate von Styrol und alkylsubstituiertem Styrol mit vinylgruppenhaltigen Monomeren, z.B. Polystyrol, Poly(p-methyl)styrol, Poly(styrol-co-maleinsäureanhydrid), Poly(styrol-co-acrylnitril-co-maleinsäure-N-phenylimid), Poly(styrol-co-maleinsäure-N-phenylimid),

b) Homo- und Mischpolymerisate von $C_1$-$C_4$-Alkyl-(meth)-acrylaten, mit vinylgruppenhaltigen Monomeren, z.B. Polymethylmethacrylat, Poly(methylmethacrylat-co-styrol), Poly(methylmethacrylat-co-maleinsäureanhydrid), Poly(methylmethacrylat-co-styrol-co-maleinsäureanhydrid),

c) halogenhaltige Polymerisate, z.B. Polyvinylchlorid, Polyvinylidenchlorid, chloriertes Polyethylen,

d) Polycarbonate, z.B. auf Basis von Bisphenol A, Tetramethylbisphenol A, Tetrabrombisphenol A,

e) Polyester, z.B. auf Basis Terephthalsäure, Isophthalsäure, Ethylenglykol, Butandiol,

f) Polyamide, z.B. auf Basis von $\epsilon$-Caprolactam, Laurinlactam, Adipinsäure/Hexamethylendiamin.

Dabei werden die erfindungsgemäß hergestellten Pfropfkautschuke in Mengen von 1 bis 80, vorzugsweise 5 bis 50 Gew.-%, bezogen auf die gesamte Formmasse, eingesetzt.

In den folgenden Beispielen sind Teile immer Gewichtsteile und % immer Gew.-%, wenn nicht anders angegeben.

Beispiele

4

Beispiele 1 bis 8

50 Teile (gerechnet als Feststoff) eines durch radikalische Polymerisation hergestellten anionisch emulgierten Polybutadienlatex mit einem $d_{50}$-Wert von ca. 260 nm wurden mit Wasser auf einen Feststoffgehalt von ca. 20% gebracht, wonach auf Reaktionstemperatur erwärmt und mit 0,5 Teilen $K_2S_2O_8$ versetzt wurde. Danach wurden 50 Teile eines Gemisches aus 36 Teilen Styrol, 14 Teilen Acrylnitril und 0,15 Teilen tert.-Dodecylmercaptan sowie 2 Teile (gerechnet als Festsubstanz) des Natriumsalzes eines Harzsäuregemisches (gelöst in alkalisch eingestellten Wasser) über 4 Stunden zudosiert. Dabei erfolgte die Dosierung in der in Tabelle 1 angegebenen Weise. Nach einer 4-stündigen Nachreaktionszeit bei der jeweiligen Reaktionstemperatur wurde der Pfropflatex nach Zugabe von ca. 1,0 Teilen eines phenolischen Antioxidans mit einem Magnesiumsulfat/Essigsäure-Gemisch koaguliert und nach dem Waschen das resultierende Pulver bei 70 ˚C im Vakuum getrocknet.

45 Teile dieses Pfropfpolymerisats wurden mit 55 Teilen eines Styrol/Acrylnitril-Harzes (72:28, $\overline{M}_w$ = 115.000, $M_w/M_n$-1$\leqq$2), 2 Teilen Pentaerythrittetrastearat und 0,1 Teilen eines Silikonöls in einem Innenkneter vermischt und anschließend zu Normkleinstäben und zu einer Platte (zur Oberflächenbeurteilung) verspritzt.

Folgende Daten wurden ermittelt:

Kerbschlagzähigkeit bei Raumtemperatur ($a_k^{RT}$ bzw. $Izod^{RT}$) und bei -40 ˚C ($a_k^{40°C}$ bzw. $Izod^{-40°C}$) nach DIN 53 453 ($a_k$ in Einheit: $kJ/m^2$) und ASTM 256-56 ISO/R 180 (Izod in Einheit: J/m)

Kugeldruckhärte ($H_c$) nach DIN 53 456 (Einheit: $N/mm^2$)

Fließverhalten durch Bestimmung des Volumen-Fließindex MVI nach DIN 53 735U (Einheit: $cm^3/10min$).

Wie aus Tabelle 1 ersichtlich ist, führt die erfindungsgemäße Herstellung des Pfropfkautschuks unabhängig von der angewandten Reaktionstemperatur zu deutlich erhöhter Zähigkeit, erhöhten Härtewerten und einer verbesserten Fließfähigkeit.

5

Tabelle 1

| Formmasse | Bedingungen bei der Pfropfkautschukherstellung | | | | | Prüfdaten | | | | | | |
|---|---|---|---|---|---|---|---|---|---|---|---|---|
| | Reaktions-temp. | Monomerdosierung*) | | | | $a_k^{RT}$ | $a_k$ -40°C | Izod$^{RT}$ | Izod -40°C | $H_c$ | MVI | Glanz |
| | | 1h | 2h | 3h | 4h | | | | | | | |
| 1 | 60°C | 1/2 | 1/4 | 1/8 | 1/8 | 23,6 | 16,9 | 637 | 289 | 85 | 3,3 | + |
| 2 (Vergleich) | 60°C | 1/4 | 1/4 | 1/4 | 1/4 | 21,7 | 16,0 | 547 | 269 | 84 | 3,1 | + |
| 3 | 65°C | 1/2 | 1/4 | 1/8 | 1/8 | 19,2 | 15,0 | 509 | 255 | 87 | 5,7 | + |
| 4 (Vergleich) | 65°C | 1/4 | 1/4 | 1/4 | 1/4 | 18,6 | 13,3 | 514 | 267 | 83 | 4,8 | + |
| 5 | 70°C | 1/2 | 1/4 | 1/8 | 1/8 | 19,1 | 14,4 | 623 | 230 | 88 | 6,2 | + |
| 6 (Vergleich) | 70°C | 1/4 | 1/4 | 1/4 | 1/4 | 15,8 | 13,3 | 505 | 217 | 84 | 5,5 | + |
| 7 | 75°C | 1/2 | 1/4 | 1/8 | 1/8 | 16,8 | 13,0 | 555 | 189 | 87 | 7,1 | + |
| 8 (Vergleich) | 75°C | 1/4 | 1/4 | 1/4 | 1/4 | 14,9 | 11,2 | 433 | 163 | 83 | 6,3 | + |

*) Gesamtzeitraum der Zudosierung = 4 Zeitintervalle mit $\Delta t$ jeweils 60 min.

Beispiele 9 bis 14

50 Teile (gerechnet als Feststoff) eines durch radikalische Polymerisation hergestellten anionisch emulgierten Polybutadienlatex mit einem $d_{50}$-Wert von ca. 342 nm wurden mit Wasser auf einen Feststoffgehalt von ca. 20% gebracht, wonach auf 65 °C erwärmt und mit 0,5 Teilen $K_2S_2O_8$ versetzt wurde. Danach wurden 50 Teile eines Gemisches aus 36 Teilen Styrol, 14 Teilen Acrylnitril und 0,15 Teilen tert.-Dodecylmercaptan sowie 2 Teile (gerechnet als Festsubstanz) das Natriumsalzes eines Harzsäuregemisches (gelöst in alkalisch eingestelltem Wasser) über die angegebene Zeitdauer in der jeweils in Tabelle 2 angegebenen Weise zudosiert. Nach der für die Beispiele 1-8 beschriebenen Weise wurde das Pfropfpolymerisat aufgearbeitet und wie dort beschrieben mit einem Styrol/Acrylnitril-Harz vermischt und zu Prüfkörpern verarbeitet.

Wie aus Tabelle 2 zu erkennen ist, führt die erfindungsgemäße Herstellung des Pfropfkautschuks unabhängig von der Gesamtzudosierzeit der Monomeren zu Formmassen mit erhöhter Zähigkeit, größerer Härte und verbesserter Fließfähigkeit.

**Tabelle 2**

| Formmasse | Bedingungen bei der Pfropfkautschukherstellung Monomerdosierung*) | | | | | | | | Prüfdaten | | | | | | |
|---|---|---|---|---|---|---|---|---|---|---|---|---|---|---|---|
| | 1h | 2h | 3h | 4h | 5h | 6h | 7h | 8h | $a_k^{RT}$ | $a_k^{-40°C}$ | Izod$^{RT}$ | Izod$^{-40°C}$ | $H_c$ | MVI | Glanz |
| 9 | 1/2 | 1/4 | 1/8 | 1/8 | - | - | - | - | 23 | 16 | 600 | 273 | 84 | 4,4 | + |
| 10(Vergleich) | 1/4 | 1/4 | 1/4 | 1/4 | - | - | - | - | 21 | 15 | 589 | 260 | 81 | 4,0 | + |
| 11 | 4/12 | 3/12 | 2/12 | 1/12 | 1/12 | 1/12 | - | - | 22 | 15 | 558 | 266 | 83 | 5,2 | + |
| 12(Vergleich) | 1/6 | 1/6 | 1/6 | 1/6 | 1/6 | 1/6 | - | - | 20 | 14 | 584 | 255 | 78 | 5,1 | + |
| 13 | 5/16 | 4/16 | 2/16 | 1/16 | 1/16 | 1/16 | 1/16 | 1/16 | 20 | 14 | 538 | 252 | 80 | 6,4 | + |
| 14(Vergleich | 1/8 | 1/8 | 1/8 | 1/8 | 1/8 | 1/8 | 1/8 | 1/8 | 18 | 14 | 489 | 223 | 77 | 5,7 | + |

*) Gesamtzeitraum der Zudosierung: 4 Zeitintervalle mit $\Delta t$ jeweils 60 min bzw.
6 Zeitintervalle mit $\Delta t$ jeweils 60 min bzw.
8 Zeitintervalle mit $\Delta t$ jeweils 60 min.

Beispiele 15 bis 22

50 Teile (gerechnet als Feststoff) eines durch radikalische Polymerisation hergestellten anionisch emulgierten Polybutadienlatex mit einem $d_{50}$-Wert von ca. 438 nm wurden mit Wasser auf einen Feststoffgehalt von ca. 20% gebracht, wonach auf 65 $^{\circ}$ C erwärmt und mit 0,5 Teilen $K_2S_2O_8$ versetzt wurde. Danach wurden 50 Teile eines Gemisches aus 36 Teilen Styrol und 14 Teilen Acrylnitril mit bzw. ohne Zusatz von 0,15 Teilen tert.-Dodecylmercaptan sowie 2 Teile (gerechnet als Festsubstanz) des Natriumsalzes eines Harzsäuregemisches (gelöst in alkalisch eingestelltem Wasser) über 4 Stunden wie in Tabelle 3 angegeben zudosiert. Nach einer 4-stündigen Nachreaktionszeit wurde der Pfropflatex wie für die Beispiele 1 bis 8 beschrieben aufgearbeitet.

Nach Abmischung des Pfropfpolymerisats mit dem oben beschriebenen Styrol/Acrylnitril-Harz wie in Tabelle 3 angegeben wurden Prüfkörper hergestellt.

Die in Tabelle 3 angeführten Ergebnisse zeigen, daß die erfindungsgemäß über spezielle Zudosierung und gleichzeitigen Zusatz eines Mercaptans hergestellten Pfropfkautschuke bei allen Pfropf-Harz-Verhältnissen zu verbesserten Zähigkeiten, Härten und Fließfähigkeiten führen.

Tabelle 3

| Formmasse | Bedingungen bei der Pfropfkautschukherstellung | | | | | Pfropf:Harz-Verhältnis [Gew.-Teile] | $Izod^{RT}$ | $Izod^{-40°C}$ | $a_k^{-40°C}$ | Hc | MVI |
|---|---|---|---|---|---|---|---|---|---|---|---|
| | Monomerdosierung*) | | | | t-Dodecylmercaptan | | | | | | |
| | 1h | 2h | 3h | 4h | | | | | | | |
| 15 | 1/2 | 1/4 | 1/8 | 1/8 | 0,15 | 30:70 | 444 | 117 | 9,4 | 111 | 6,9 |
| 16 (Vergleich) | 1/2 | 1/4 | 1/8 | 1/8 | - | 30:70 | 424 | 119 | 9,1 | 108 | 6,7 |
| 17 | 1/2 | 1/4 | 1/8 | 1/8 | 0,15 | 40:60 | 651 | 190 | 14,6 | 92 | 5,9 |
| 18 (Vergleich) | 1/2 | 1/4 | 1/8 | 1/8 | - | 40:60 | 606 | 232 | 14,1 | 90 | 5,0 |
| 19 | 1/2 | 1/4 | 1/8 | 1/8 | 0,15 | 50:50 | 678 | 312 | 17,3 | 77 | 3,9 |
| 20 (Vergleich) | 1/2 | 1/4 | 1/8 | 1/8 | - | 50:50 | 653 | 296 | 16,2 | 75 | 3,2 |
| 21 | 1/2 | 1/4 | 1/8 | 1/8 | 0,15 | 60:40 | 657 | 345 | 20,0 | 63 | 2,4 |
| 22 (Vergleich) | 1/2 | 1/4 | 1/8 | 1/8 | - | 60:40 | 598 | 340 | 17,9 | 61 | 2,2 |

* Gesamtzeitraum der Zudosierung: 4 Zeitintervalle mit $\Delta t$ jeweils 60 min

**Patentansprüche**

1. Verfahren zur Herstellung einer thermoplastischen Formmasse durch Mischen von

10 bis 65 Gew.-% mindestens eines Pfropfpolymerisats, welches erhältlich ist durch Emulsionspolymerisation von Styrol und Acrylnitril im Gewichtsverhältnis 90:10 bis 50:50, wobei Styrol ganz oder teilweise ersetzt werden kann durch $\alpha$-Methylstyrol oder Methylmethacrylat, in Gegenwart mindestens eines Kautschuks mit einer Glastemperatur unter $0^\circ$C als Grundlage hältnis von eingesetzten Monomeren zu eingesetztem Kautschuk 20:80 bis 70:30 beträgt und

90 bis 35 Gew.-% eines Copolymerisats aus Styrol und Acrylnitril im Gewichtsverhältnis 90:10 bis 50:50, wobei das Styrol ganz oder teilweise durch $\alpha$-Methylstyrol oder Methylmethacrylat ersetzt werden kann,

dadurch gekennzeichnet, daß man zur Herstellung des Pfropfpolymerisats die Pfropfmonomeren und 0,05 bis 1,00 Gew.-Teile (pro 100 Gew.-Teile Pfropfmonomer) eines Mercaptans stufenweise über einen Zeitraum zu dem Latex des Kautschuks gibt, wobei mindestens in der ersten Hälfte des Zeitraums die in jedem Zeitintervall $\Delta t_{n+1}$ zugegebene Monomerteilmenge das 0,30 bis 0,95fache der im vorhergehenden Zeitintervall $\Delta t_n$ zugegebenen Monomermenge beträgt und der gesamte Zeitraum n Zeitintervalle mit n = 3 bis 30 umfaßt und jedes Zeitintervall $\Delta t$ 5 bis 100 Minuten lang ist.

**2.** Verwendung der gemäß Anspruch 1 erhaltenen Pfropfkautschuke zur Herstellung kautschukmodifizierter thermoplastischer Formmassen.

## Claims

**1.** A process for the production of a thermoplastic moulding compound by mixing of

10 to 65% by weight of at least one graft polymer obtainable by emulsion polymerization of styrene and acrylonitrile in a ratio by weight of 90:10 to 50:50, the styrene being completely or partly replaceable by $\alpha$-methyl styrene or methyl methacrylate, in the presence of at least one rubber having a glass transition temperature below $0^\circ$C as the graft base, the ratio by weight of monomers used to rubber used being from 20:80 to 70:30, and

90 to 35% by weight of a copolymer of styrene and acrylonitrile in a ratio by weight of 90:10 to 50:50, the styrene being completely or partly replaceable by $\alpha$-methyl styrene or methyl methacrylate,

characterized in that, to prepare the graft polymer, the graft monomers and 0.05 to 1.00 parts by weight (per 100 parts by weight graft monomer) of a mercaptan are added to a latex of the rubber in steps over a period, the quantity of monomer added in each time interval $\Delta t_{n+1}$ being from 0.30 to 0.95 times the quantity of monomer added in the preceding time interval $\Delta t_n$, at least in the first half of the period, and the total period comprising n time intervals with n = 3 to 30 and each time interval $\Delta t$ being from 5 to 100 minutes.

**2.** The use of the graft rubbers obtained by the process claimed in claim 1 for the production of rubber-modified thermoplastic moulding compounds.

## Revendications

**1.** Procédé de préparation d'une matière à mouler thermoplastique par mélange de

10 à 65 % en poids d'au moins un polymère greffé obtenu par polymérisation en émulsion du styrène et de l'acrylonitrile à des proportions relatives en poids de 90 : 10 à 50 : 50, le styrène pouvant être remplacé en totalité ou en partie par de l'$\alpha$-méthylstyrène ou du méthacrylate de méthyle, en présence d'au moins un caoutchouc ayant une température de transition de second ordre inférieure à $0^\circ$C, servant de support, les proportions relatives en poids entre les monomères mis en oeuvre et le caoutchouc mis en oeuvre étant de 20 : 80 à 70 : 30 et

90 à 35 % en poids d'un copolymère du styrène et de l'acrylonitrile dans des proportions relatives en poids de 90 : 10 à 50 : 50, le styrène pouvant être remplacé en totalité ou en partie par de l'$\alpha$-méthylstyrène ou du méthacrylate de méthyle,

caractérisé en ce que, pour la préparation du polymère greffé, on ajoute au latex du caoutchouc les monomères à greffer et 0,05 à 1,00 partie en poids (pour 100 parties en poids des monomères à greffer) d'un mercaptan, en plusieurs stades opératoires, dans une durée déterminée, la quantité de monomères ajoutée, au moins dans la première moitié de la durée totale, dans chaque intervalle de temps $\Delta t_{n+1}$ représentant de 0,30 à 0,95 fois la quantité de monomères ajoutée dans l'intervalle de temps précédent $\Delta t_n$, et la durée totale comportant n intervalles de temps avec n = 3 à 30, chaque intervalle de temps $\Delta t$ étant de 5 à 100 min.

2. Utilisation des caoutchoucs greffés obtenus selon la revendication 1 pour la préparation de matières à mouler thermoplastiques à modification caoutchouc.